# EUROPÄISCHE PATENTANMELDUNG

(11) **EP 3 919 884 A1**
(43) Veröffentlichungstag der Anmeldung: **08.12.2021**
(21) Anmeldenummer: 20178019.4
(22) Anmeldetag: 03.06.2020
(51) Int. Cl.: G01L 5/24, F16B 31/02

(54) **VERBINDUNGSBAUTEIL, ZUSAMMENSTELLUNG AUS VERBINDUNGSBAUTEILEN, ÜBERWACHUNGSSYSTEM UND HERSTELLUNGSVERFAHREN**

(71) Anmelder: Hilti Aktiengesellschaft, 9494 Schaan (LI)
(72) Erfinder: Pfarr, Lukas, 6800 Feldkirch (AT); Ranogajec, Slaven, 31551 Belisce (HR)
(74) Vertreter: Hilti Aktiengesellschaft Corporate Intellectual Property

(57) **Zusammenfassung**

Die Erfindung betrifft ein Verbindungsbauteil (10), umfassend einen Verbindungsbauteilkörper (12), einen Sensor (16), der eingerichtet ist, einen Wert einer auf den Sensor (16) einwirkenden Sensormessgröße in eine elektrische Ausgangsgröße umzusetzen und eine Funkschnittstelle (22), die eingerichtet ist, mit einem Kommunikationsgerät (32) in Abhängigkeit von der elektrischen Ausgangsgröße mittels wenigstens eines Funksignals zu kommunizieren. Sie ist dadurch gekennzeichnet, dass der Sensor (16) eingerichtet ist, den Wert der Sensormessgröße in die elektrische Ausgangsgröße entsprechend einer stetigen Schaltstufencharakteristik mit wenigstens einem Sensormessgrößen-Schwellwert (S1) umzusetzen. Weiter betrifft die Erfindung eine Zusammenstellung (30) wenigstens zweier Verbindungsbauteile (10), ein Überwachungssystem (24) sowie ein Herstellungsverfahren (100) zur Herstellung eines Verbindungsbauteils (10). Die Erfindung stellt besonders kostengünstige, vielseitig verwendbare Verbindungsbauteile (10) mit einer Überwachungsmöglichkeit bereit.

## Beschreibung

Die Erfindung betrifft ein Verbindungsbauteil, umfassend einen Verbindungsbauteilkörper, einen Sensor, der eingerichtet ist, einen Wert einer auf den Sensor einwirkenden Sensormessgröße in eine elektrische Ausgangsgröße umzusetzen und eine Funkschnittstelle, die eingerichtet ist, mit einem Kommunikationsgerät in Abhängigkeit von der elektrischen Ausgangsgröße mittels wenigstens eines Funksignals zu kommunizieren.

Aus der US 9 483 674 B1 ist ein RFID-Tag mit einem als Unterlegscheibe ausgebildeten Federelement bekannt, durch das ein Stromkreis je nach Belastung des Federelements geschlossen oder unterbrochen werden kann.

Aufgabe der vorliegenden Erfindung ist es, wenigstens ein besonders vielseitig und kostengünstig einsetzbares, gattungsgemäßes Verbindungsbauteil, ein Überwachungssystem mit einem solchen Verbindungsbauteil sowie ein Herstellverfahren zur Herstellung eines solchen Verbindungsbauteils anzubieten.

Gelöst wird die Erfindung durch ein Verbindungsbauteil, umfassend einen Verbindungsbauteilkörper, einen Sensor, der eingerichtet ist, einen Wert einer auf den Sensor einwirkenden Sensormessgröße in eine elektrische Ausgangsgröße umzusetzen und eine Funkschnittstelle, die eingerichtet ist, mit einem Kommunikationsgerät in Abhängigkeit von der elektrischen Ausgangsgröße mittels wenigstens eines Funksignals zu kommunizieren, wobei der Sensor eingerichtet ist, den Wert der Sensormessgröße in die elektrische Ausgangsgröße entsprechend einer stetigen Schaltstufencharakteristik mit wenigstens einem Sensormessgrößen-Schwellwert umzusetzen.

Ein solches Verbindungsbauteil lässt sich beispielsweise durch Anpassung der stetigen Schaltstufencharakteristik besonders vielseitig und damit kostengünstig verwenden. Dazu können unterschiedliche Arten von Verbindungsbauteilkörpern vorgesehen sein. Unter einem Verbindungsbauteilkörper kann ein zur Verbindung und/oder zur Unterstützung der Verbindung zweier Bauteile, insbesondere zweier Bauteile eines Bauwerks, vorgesehenes Element verstanden werden, beispielsweise eine Unterlegscheibe, eine Schraube, ein Anker und/oder eine Mutter. Das Bauwerk kann beispielsweise ein Boden, eine Wand, eine Decke, ein Holz-, Ziegel- und/oder ein Betonelement sein.

Unter einer stetigen Schaltstufencharakteristik kann verstanden werden, dass die Kennlinie des Sensors, also die Sensormessgrößenwert-Ausgangsgrößenwert-Kurve, zumindest innerhalb eines vorgesehenen Einsatzbereiches des Sensors, einen mathematisch stetigen Verlauf mit zumindest einem Wendepunkt aufweist. Die Bereiche links bzw. rechts des Wendepunktes können jeweils einem Zustand, d. h. einer Schaltstufe, der Sensormessgröße bzw. des Sensors entsprechen. Die Kurve kann, zumindest in einem Abschnitt, einen sigmoidalen oder zumindest im Wesentlichen sigmoidalen Verlauf aufweisen. Der Wendepunkt kann sich am Sensormessgrößen-Schwellwert befinden. Die Kurve kann ein oder mehrere Wendepunkte aufweisen. Somit kann der die Sensormessgröße bzw. der Sensor zwei oder mehrere, insbesondere abzählbar viele, Zustände aufweisen.

Der stetige Verlauf der Kurve ermöglicht zu jeder Zeit einen definierten elektrischen Zustand der elektrischen Komponenten des Verbindungsbauteils, insbesondere des Sensors und/oder der Funkschnittstelle.

Die Kurve kann einen mathematisch steilen oder sehr steilen Verlauf aufweisen. Somit kann der Sensor das Verhalten eines mechanischen Schalters replizieren oder zumindest im Wesentlichen replizieren. Insbesondere kann die elektrische Ausgangsgröße in Abhängigkeit von der Sensormessgröße einen ersten Zustand, beispielsweise ein geringer elektrischer Widerstand, oder einen zweiten Zustand, beispielsweise ein hoher elektrischer Widerstand, indizieren. Nachteile eines mechanischen Schalters wie beispielsweise Verschleiß, Funkstörungen der erzeugten elektrischen Ausgangsgröße oder dergleichen können allerdings reduziert oder vermieden werden.

Für eine einfache Auswertung des Sensorsignals kann die elektrische Ausgangsgröße ein elektrischer Widerstandswert, ein elektrischer Kapazitätswert und/oder ein elektrischer Induktivitätswert sein.

Der Sensor kann eingerichtet sein, als Sensormessgröße eine auf das Verbindungsbauteil einwirkende und/oder eine im Verbindungsbauteil wirkende Kraft und/oder einen auf das Verbindungsbauteil einwirkenden und/oder einen im Verbindungsbauteil wirkenden Druck zu erfassen. Alternativ oder ergänzend ist auch denkbar, dass der Sensor eingerichtet ist, als Sensormessgröße eine Dehnung, eine Translation, eine Rotation, eine Temperatur, eine Feuchtigkeit und/oder einen Luftdruck zu erfassen.

Der Sensor und/oder die Funkschnittstelle können, insbesondere zusätzlich, eingerichtet sein, ein oder mehrere Identifikationskennzeichen, beispielsweise eine Typ- und/oder eine individuelle Bauteilkennung, in die elektrische Ausgangsgröße und/oder in das Funksignal der Funkschnittstelle einzuprägen.

Alternativ oder ergänzend kann das Verbindungsbauteil, beispielsweise der Verbindungsbauteilkörper, ein physisches Identifikationsmerkmal, aufweisen.

Bei einer Klasse von Ausführungsformen der Erfindung ist der Sensormessgrößen-Schwellwert der Schaltstufencharakteristik derart gewählt, dass eine ordnungsgemäße Verwendung des Verbindungsbauteils und/oder eines zu überwachenden Bauteils entweder stets mit einem Überschreiten oder stets mit einem Unterschreiten des Sensormessgrößen-Schwellwerts durch die Sensormessgröße einhergeht. Beispielsweise kann der Sensormessgrößen-Schwellwert bei einer Unterlegscheibe, deren Sensor einen Anpressdruck erfasst, derart gewählt sein, dass bei Überschreiten des Sensormessgrößen-Schwellwerts ein ordnungsgemäßer Sitz einer durch die Unterlegscheibe geführten und beispielsweise an einem Betonelement montierten Schraube gewährleistet ist und dass bei Unterschreiten des Sensormessgrößen-Schwellwerts der Sitz der Schraube nicht ordnungsgemäß ist.

Dazu kann der Sensormessgrößen-Schwellwert einstellbar und/oder voreingestellt sein. Dazu können Materialeigenschaften, Form und/oder Dimensionierung des Sensors, insbesondere seines Sensormaterials, entsprechend eingestellt und/oder ausgewählt sein. Denkbar ist insbesondere, die Dimensionierung und/oder die Gestaltung des Sensors, eines Sensormaterials des Sensors und/oder wenigstens einer Elektrode des Sensors, insbesondere der Geometrie und/oder der Größe einer Elektrodenfläche, in Abhängigkeit von einem Parameter des Verbindungsbauteils, insbesondere des Verbindungsbauteilkörpers, und/oder eines Bauteils, mit dem das Verbindungsbauteil verwendet werden soll, zu wählen. Das Sensormaterial kann, vorzugsweise mit wenigstens einem, besonders bevorzugt mit zwei verschiedenen, Dotierungsmaterialien, dotiert sein. Dotierungsart und/oder -dichte des wenigstens einen Dotierungsmaterials können zur Einstellung des Sensormessgrößen-Schwellwerts gewählt sein. Die Einstellung des Sensormessgrößen-Schwellwerts kann alternativ oder ergänzend auch mittels eines Halbleiterbauelements, beispielsweise mittels eines Transistors, und/oder mittels einer Verstärkerschaltung erfolgen. Denkbar ist hierzu auch eine Einstellung eines Offset-Punktes, beispielsweise durch Hinzufügung, Entfernung und/oder Anpassung eines seriell oder parallel zum Sensor geschalteten elektrischen Widerstands.

Das Verbindungsbauteil kann eine Sandwich-Struktur aufweisen. Dazu kann der Sensor vollständig oder wenigstens teilweise in das Verbindungsbauteil eingebettet sein. Insbesondere kann er zwischen zwei Verbindungsbauteilschichten des Verbindungsbauteils angeordnet sein. Die Verbindungsbauteilschichten können einen Teil des Verbindungsbauteilkörpers oder den vollständigen Verbindungsbauteilkörper bilden. Der Sensor kann durch die Verbindungsbauteilschichten beispielsweise gegenüber schädlichen Umwelteinflüssen geschützt sein. Der Sensor kann eingerichtet sein, Parameter des Verbindungsbauteilkörpers zu erfassen.

Die Lebensdauer des Verbindungsbauteils lässt sich ferner verlängern, wenn das Verbindungsbauteil, insbesondere sein Verbindungsbauteilkörper, ausgebildet ist, den Wert der auf den Sensor einwirkenden Sensormessgröße auf einen Mindest- und/oder einen Höchstwert zu begrenzen. Auch lässt sich hierdurch ein Bereich der Sensormessgröße einstellen, der durch den Sensor erfasst werden soll.

Vorzugsweise weist der Sensor, insbesondere das Sensormaterial des Sensors, ein Polymer, insbesondere ein leitfähiges und/oder elastisch verformbares Polymer, auf. Das Polymer kann ein Elastomer sein. Das Polymer kann einen von der Sensormessgröße abhängigen, beispielsweise einen kraft- und/oder druckabhängigen, Widerstandswert und/oder spezifischen Widerstandswert aufweisen. Das Polymer kann wenigstens ein Dotierungsmaterial aufweisen.

Besonders bevorzugt ist die Funkschnittstelle als RFID-Tag ausgebildet und/oder weist ein RFID-Tag auf. Die Funkschnittstelle kann als passive Funkschnittstelle ausgebildet sein. Insbesondere können die Energieversorgungen der Funkschnittstelle und/oder des Sensors passiv erfolgen; dazu kann zur Energieversorgung von der Funkschnittstelle aufgefangene Energie eines Funksignals verwendet werden. Alternativ oder ergänzend kann die Energieversorgung der Funkschnittstelle und/oder des Sensors durch eine integrierte Stromquelle wie beispielsweise eine Batterie, einen Akkumulator, eine Solarzelle, ein Thermoelement und/oder eine Brennstoffzelle erfolgen.

Die Funkschnittstelle kann alternativ oder ergänzend auch einem Funkstandard wie beispielsweise WLAN, Bluetooth und/oder einem Niedrigleistungsfunkstandard entsprechen und/oder ein entsprechendes Funkstandard-spezifisch arbeitendes Modul aufweisen.

Bei einem besonders kostengünstigen Verbindungsbauteil kann vorgesehen sein, dass der Sensor einen Teil der Funkschnittstelle bildet und/oder umfasst. Weist die Funkschnittstelle einen Schwingkreis auf, können durch den Sensor beispielsweise die Resonanzfrequenz, die Güte und/oder die Impulsantwort des Schwingkreises in Abhängigkeit von der Sensormessgröße beeinflussbar sein. Insbesondere kann die elektrische Ausgangsgröße auf den Schwingkreis, insbesondere auf seine Resonanzfrequenz, seine Güte und/oder seine Impulsantwort, einwirken. Aufgrund der Schaltstufencharakteristik lässt sich durch eine solche Integration des Sensors, beispielsweise bei einer als RFID-Tag ausgebildeten und/oder ein solches enthaltenden Funkschnittstelle, eine Sabotageschleifen-Schnittstelle, d. h. ein "tamper loop interface", realisieren.

Das Verbindungsbauteil, insbesondere der Verbindungsbauteilkörper, kann als wenigstens eine Schraube, als wenigstens ein Anker und/oder als wenigstens eine Unterlegscheibe ausgebildet sein und/oder wenigstens eine Schraube, wenigstens einen Anker und/oder wenigstens eine Unterlegscheibe aufweisen. Der Verbindungsbauteilkörper kann beispielsweise aus zwei Unterlegscheiben gebildet sein.

Das Verbindungsbauteil kann ferner wenigstens zwei Sensoren aufweisen, die jeweils eingerichtet sind, einen Wert einer auf den jeweiligen Sensor einwirkenden Sensormessgröße in eine elektrische Ausgangsgröße umzusetzen. Die Sensoren können gleichartige Sensormessgrößen oder alternativ unterschiedliche Arten von Sensormessgrößen erfassen. Auch ist dadurch denkbar, die Funkschnittstelle mit mehreren der wenigstens zwei Sensoren zu verbinden. Die Verbindung kann kabelgebunden erfolgen. Beispielsweise können durch einen solchen Aufbau mehreren Verbindungsbauteilkörpern, die an verschiedenen Orten an einem Bauteil angeordnet sein können, jeweils ein Sensor zugeordnet sein. Die elektrischen Ausgangsgrößen der einzelnen Sensoren können auf eine gemeinsame Funkschnittstelle einwirken und/oder dieser zugeführt werden.

Auch ist denkbar, dass das Verbindungsbauteil wenigstens ein Gehäuse aufweist. In dem Gehäuse können der Verbindungsbauteilkörper, die Funkschnittstelle und/oder der Sensor zumindest teilweise, vorzugsweise vollständig, angeordnet sein.

Darüber hinaus kann das Verbindungsbauteil eine Positionsermittlungskomponente, beispielsweise eine satellitengestützte Positionsermittlungskomponente, einen nichtflüchtigen und/oder einen flüchtigen Datenspeicher, eine A/D-Wandlereinheit und/oder eine Prozessoreinheit aufweisen. Die A/D-Wandlereinheit kann als 1-Bit-A/D-Wandler, beispielsweise mit Hilfe eines Schmitt-Triggers, ausgebildet sein.

In den Rahmen der Erfindung fällt des Weiteren eine Zusammenstellung aus wenigstens einem ersten erfindungsgemäßen Verbindungsbauteil mit einem ersten Sensor und einem zweiten erfindungsgemäßen Verbindungsbauteil mit einem zweiten Sensor, wobei der erste Sensormessgrößen-Schwellwert der Schaltstufencharakteristik des ersten Sensors sich von dem zweiten Sensormessgrößen-Schwellwert der Schaltstufencharakteristik des zweiten Sensors unterscheidet. Der erste und/oder der zweite Sensormessgrößen-Schwellwert können abhängig von Eigenschaften des jeweils zugehörigen Verbindungsbauteils und/oder abhängig von einem anderen, insbesondere in räumlicher Nähe befindlichen, Verbindungsbauteils und/oder Bauteils gewählt sein. Beispielsweise können die Sensormessgrößen-Schwellwerte abhängig von einer für einen korrekten Sitz des jeweiligen Verbindungsbauteilkörpers erforderlichen Mindest-Anpresskraft und/oder allgemein von einem vordefinierten Sollwert der jeweiligen Sensormessgröße gewählt sein.

Auch fällt in den Rahmen der Erfindung ein Überwachungssystem, umfassend wenigstens ein erfindungsgemäßes Verbindungsbauteil und wenigstens ein Kommunikationsgerät, das eingerichtet ist, mit der Funkschnittstelle des Verbindungsbauteils zu kommunizieren. Das Überwachungssystem kann mehrere erfindungsgemäße Verbindungsbauteile aufweisen. Dann kann das Kommunikationsgerät eingerichtet sein, mit mehreren der Verbindungsbauteile zeitgleich und/oder quasi-zeitgleich zu kommunizieren. Die Kommunikation kann einzelfallweise und/oder mehrfach, beispielsweise in regelmäßigen Zeitabständen, erfolgen. Das Kommunikationsgerät kann eingerichtet sein, Energie und/oder Daten vom Verbindungsbauteil, insbesondere von dessen Funkschnittstelle, zu empfangen und/oder zu senden.

Insbesondere kann das Kommunikationsgerät eingerichtet sein, Daten zu der elektrischen Ausgangsgröße und/oder zu dem Wert der Sensormessgröße des Sensors des Verbindungsbauteils, zu wenigstens einem Identifikationskennzeichen, beispielsweise eine Typ- und/oder eine individuelle Bauteilkennung des Verbindungsbauteils, und/oder zu wenigstens einer Positionsinformation zu empfangen und/oder auszuwerten. Denkbar ist auch, dass das Kommunikationsgerät eingerichtet ist, ein Verbindungsbauteil anhand eines Gradienten der Signalstärke seines Funksignals zu orten.

Das Kommunikationsgerät kann eine Anzeigeeinheit aufweisen. Auf der Anzeigeeinheit können ein oder mehrere der empfangenen und/oder ausgewerteten Daten darstellbar sein. Insbesondere können empfangene und/oder ausgewertete Daten mehrerer Verbindungsbauteile gleichzeitig auf der Anzeigeeinheit darstellbar sein.

Das Kommunikationsgerät kann eingerichtet sein, mit weiteren Werkzeugen und/oder Maschinen zu kommunizieren. So ist denkbar, dass das Kommunikationsgerät mit einem Montagewerkzeug kommuniziert und einen Montagevorgang mindestens solange überwacht und/oder steuert, bis eine ordnungsgemäße Montage des Verbindungsbauteils erkannt wird. Denkbar ist auch, dass das Kommunikationsgerät eingerichtet ist, mit einem Rechnersystem zu kommunizieren, um beispielsweise CAD- und/oder BIM (Building Information Modeling)-Daten abzurufen, zu senden und/oder auszutauschen.

Das Überwachungssystem kann cloud-basiert ausgebildet sein. Dazu kann das Kommunikationsgerät und/oder die Funkschnittstelle des Verbindungsbauteils eingerichtet sein, mit einem entfernten Rechnersystem, beispielsweise über Internet, zu kommunizieren.

Das Kommunikationsgerät kann mobil, insbesondere tragbar, ausgebildet sein. Es kann alternativ auch fest montierbar und/oder montiert sein.

Besonders bevorzugt kann das Kommunikationsgerät oder zumindest ein Teil des Kommunikationsgeräts an und/oder in einem mobilen, insbesondere einem unbemannten oder einem bemannten, Vehikel, beispielsweise ein Fahrzeug und/oder ein Flugobjekt, angeordnet sein. Ist das Kommunikationsgerät beispielsweise an einer Drohne angeordnet, können selbst bei großen Bauwerken wie Brücken oder Hochhäuser mit einer Vielzahl erfindungsgemäßer Verbindungsbauteile Daten dieser Verbindungsbauteile abgefragt werden. Somit lässt sich selbst ein solch großes Bauwerk schnell, einfach und kostengünstig überwachen, insbesondere fernüberwachen.

Denkbar ist eine Verwendung des Überwachungssystems zur Überprüfung einer korrekten Montage des Verbindungsbauteilkörpers des Verbindungsbauteils und/oder zur Überprüfung der korrekten Montage eines zu überwachenden Bauteils, beispielsweise zur Überprüfung des ordnungsgemäßen Sitzes eines Ankers, an dem ein als Unterlegscheibe ausgebildetes Verbindungsbauteil angeordnet ist. Auch ist eine Verwendung des Überwachungssystems zur kontinuierlichen und/oder regelmäßigen Überprüfung des Verbindungsbauteilkörpers und/oder des Bauteils, insbesondere über die erwartete Lebensdauer einer hergestellten Verbindung hinweg, denkbar.

In den Rahmen der Erfindung fällt auch ein Herstellungsverfahren zur Herstellung eines erfindungsgemäßen Verbindungsbauteils, wobei der Sensormessgrößen-Schwellwert der Schaltstufencharakteristik des Sensors des Verbindungsbauteils in Abhängigkeit von einem Sollwert der Sensormessgröße gewählt wird. Somit lässt sich bereits zum Herstellungszeitpunkt die Kennlinie des Sensors individuell auf das Verbindungsbauteil bzw. auf den Verbindungsbauteilkörper und/oder auf das zu überwachende Bauteil abstimmen. Beispielsweise kann damit bereits zum Herstellungszeitpunkt ein eine Anpresskraft des Verbindungsbauteilkörpers messender Sensor des Verbindungsbauteils eingerichtet werden zu detektieren, ob der Verbindungsbauteilkörper mit einer für einen korrekten Sitz ausreichenden Anpresskraft montiert ist oder nicht. Werden durch ein Kommunikationsgerät ein oder mehrere solcher Verbindungsbauteile abgefragt, können die nicht korrekt sitzenden Verbindungsbauteile identifiziert werden, ohne dass das Kommunikationsgerät Typinformationen oder dergleichen der abgefragten Verbindungsbauteile benötigt.

Weitere Merkmale und Vorteile der Erfindung ergeben sich aus der nachfolgenden detaillierten Beschreibung von Ausführungsbeispielen der Erfindung, anhand der Figuren der Zeichnung, die erfindungswesentliche Einzelheiten zeigt, sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

In der schematischen Zeichnung sind Ausführungsbeispiele der Erfindung dargestellt und werden in der nachfolgenden Beschreibung näher erläutert.

Es zeigen:
- **Fig. 1**: ein Verbindungsbauteil in einer Draufsicht;
- **Fig. 2**: eine schematische Schnittansicht des Verbindungsbauteils;
- **Fig. 3**: ein Prinzipschaltbild des Verbindungsbauteils;
- **Fig. 4**: ein Diagramm einer Kennlinie eines Sensors;
- **Fig. 5**: eine schematische Darstellung eines Überwachungssystems und
- **Fig. 6**: einen Ablaufplan eines Herstellungsverfahrens.

Zur Erleichterung des Verständnisses werden im Folgenden für sich funktional entsprechende Elemente die gleichen Bezugszeichen verwendet.

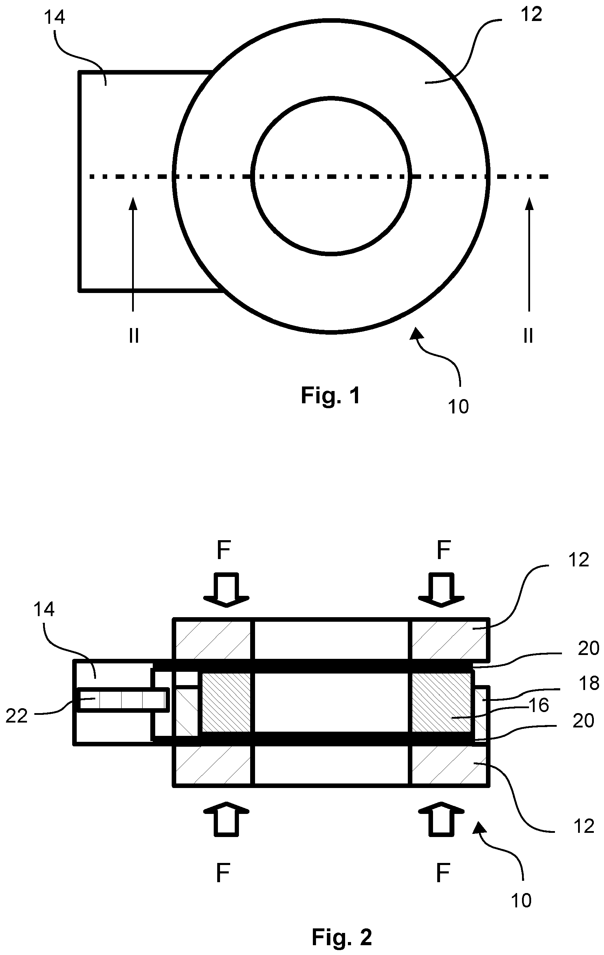

**Fig. 1** zeigt ein Verbindungsbauteil **10** in einer Draufsicht. Das Verbindungsbauteil 10 weist einen als Unterlegscheibe ausgebildeten Verbindungsbauteilkörper **12** und ein Gehäuse **14** auf.

Eine Schnittansicht des Verbindungsbauteils 10 entsprechend der Schnittlinie **II** zeigt Fig. **2****.**

In der Schnittansicht ist zu erkennen, dass der Verbindungsbauteilkörper 12 aus zwei Verbindungsbauteilschichten ausgebildet ist. Zwischen diesen Verbindungsbauteilschichten ist ein Sensor **16** angeordnet.

Der Sensor 16 ist als Drucksensor ausgebildet. Dazu ist er eingerichtet, als Sensormessgröße eine auf das Verbindungsbauteil 10 einwirkende Druckkraft **F** in einen elektrischen Widerstandswert als elektrische Ausgangsgröße umzusetzen. Dazu weist der Sensor 16 ein Sensormaterial aus einem elastisch verformbaren und elektrisch leitfähigen Polymer auf. Das Polymer ist mit einem Dotierungsmaterial, insbesondere mit Nanopartikeln, dotiert.

Je nach einwirkender Druckkraft F wird somit der Verbindungsbauteilkörper 12 und damit auch der Sensor 16 zusammengepresst. Ein steifes Wegbegrenzungselement **18,** das Teil des Verbindungsbauteilkörpers 12 sein kann, begrenzt die maximal mögliche Pressung des Sensors 16. Es kann somit den Sensor 16 gegen eine Überlastung durch eine zu hohe Druckkraft F schützen.

Durch Elektroden **20** ist der Sensor 16 mit einer Funkschnittstelle **22** elektrisch verbunden. Die Funkschnittstelle 22 ist im Gehäuse 14 angeordnet. Um eine Kommunikation der Funkschnittstelle 22 mit der Umgebung zu ermöglichen, ist das Gehäuse 14 zumindest in Bezug auf die in der Funkschnittstelle 22 verwendete Funktechnologie nicht abschirmend ausgebildet.

Die Funkschnittstelle 22 ist als RFID-Tag ausgebildet. Sie ist zum Betrieb in einem Ultrahochfrequenz (UHF)-Frequenzbereich eingerichtet.

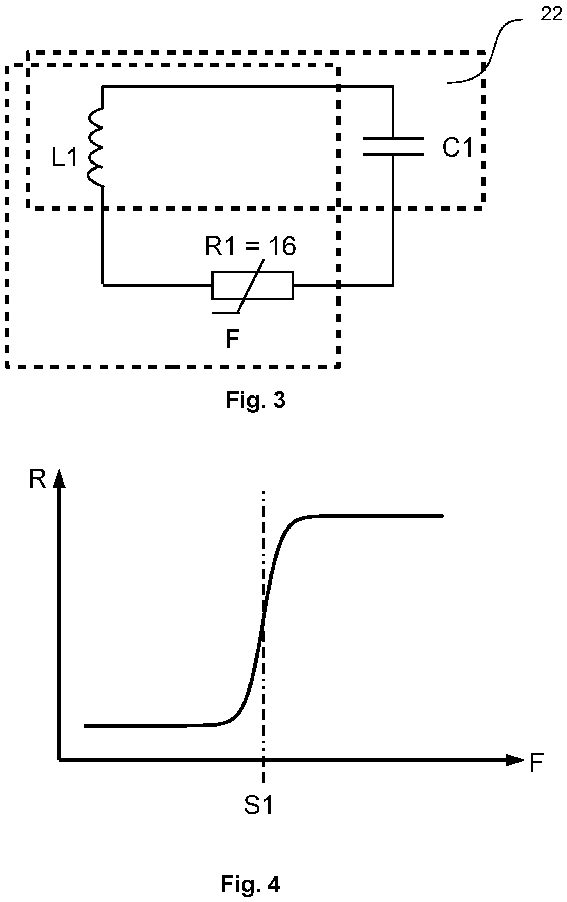

Ein Prinzipschaltbild des Verbindungsbauteils 10 (Fig. 1) zeigt **Fig. 3****.**

Die Funkschnittstelle 22 weist, wie in Fig. 3 durch ein gestricheltes Rechteck angedeutet, eine Induktivität **L1** und eine elektrische Kapazität **C1** auf. Diese Komponenten L1 und C1 bilden einen Schwingkreis. Ein, hier in Abhängigkeit von der Druckkraft F (Fig. 2), veränderlicher Widerstand **R1** ist in den Schwingkreis integriert. Der Widerstand R1 entspricht dem Sensor 16 (Fig. 2).

Der Widerstand R1, d. h. der Sensor 16, beeinflusst die Güte und die Impulsantwort des Schwingkreises und damit der Funkschnittstelle 22.

Die Induktivität L1 ist als magnetische Antenne ausgebildet, sodass über sie ein Funksignal und damit insbesondere Energie in den Schwingkreis eingekoppelt als auch ein Funksignal abgestrahlt werden kann.

In Fig. 3 ist durch ein weiteres gestricheltes Rechteck dargestellt, dass der veränderliche Widerstand R1, d. h. der Sensor 16, einen Teil der Induktivität L1 oder die gesamte Induktivität L1 bilden kann. Dazu kann die Induktivität L1 aus dem Sensormaterial ausgebildet sein. Denkbar wäre auch, dass der Sensor 16 einen Teil der Kapazität C1 oder die gesamte Kapazität C1 bildet.

**Fig. 4** zeigt ein Diagramm einer Kennlinie des Sensors 16 (Fig. 2) in Form einer Kraft **F-**Widerstandswert **R**-Kurve. Die Kraft F-Widerstandswert R-Kurve verläuft stetig. Sie weist einen sigmoidalen Verlauf mit einem Sensormessgrößen-Schwellwert **S1** auf. Der Sensormessgrößen-Schwellwert S1 entspricht der Abszisse des Wendepunkts der Kraft F-Widerstandswert R-Kurve. Die Kraft F-Widerstandswert R-Kurve verläuft steil. Der Sensor 16 weist somit im Wesentlichen zwei Zustände, in Bezug auf die elektrische Ausgangsgröße einen niedrigohmigen und einen hochohmigen Zustand, auf. Der niedrigohmige Zustand entspricht Druckkräften F kleiner als der Sensormessgrößen-Schwellwert S1. Der hochohmige Zustand entspricht Druckkräften F größer als der Sensormessgrößen-Schwellwert S1. Der niedrigohmige Zustand kann Widerstandswerten R von beispielsweise 10° Ohm bis 1x10⁷ Ohm entsprechen. Der hochohmige Zustand kann Widerstandswerten R von beispielsweise 2x10⁷ Ohm bis 10⁹ Ohm entsprechen. Beispielsweise kann dem Sensormessgrößen-Schwellwert S1 ein Widerstandswert R von 20 MOhm zugeordnet sein. Der Sensor 16 kann somit nach Art eines elektrischen Schalters fungieren. Durch den stetigen Verlauf ergibt sich dennoch jederzeit und insbesondere zu jeder Druckkraft F, die auf den Sensors 16 wirkt, ein definierter, endlicher und nicht verschwindend geringer Widerstandswert R.

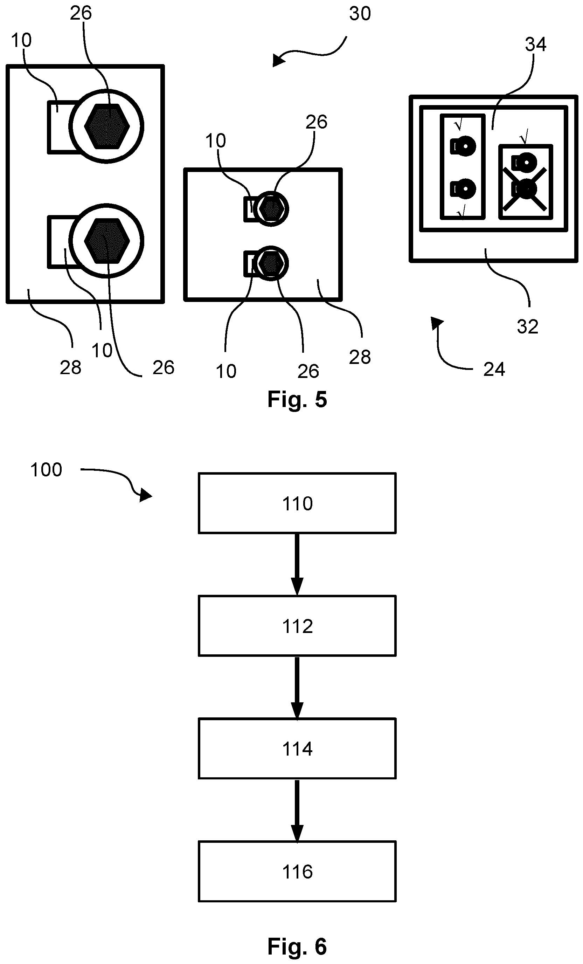

**Fig. 5** zeigt eine schematische Darstellung eines Überwachungssystems **24.** Zu überwachen ist der ordnungsgemäße Sitz mehrerer Anker **26,** die unterschiedliche Bauteile **28** fixieren sollen. Die Anker 26 sind jeweils mit als Unterlegscheiben ausgebildeten Verbindungsbauteilen 10 versehen, die den vorangehend beschriebenen Verbindungsbauteilen 10 entsprechen. Die Anker 26 weisen teilweise unterschiedliche Größen auf und erfordern für einen ordnungsgemäßen Sitz individuell unterschiedliche, definierte Mindest-Anzugsmomente. Die ihnen jeweils zugeordneten Verbindungsbauteile 10 weisen unterschiedliche, an die jeweils erforderlichen Mindest-Anzugsmomente angepasste Sensormessgrößen-Schwellwerte S1 (Fig. 4) auf. Die Resonanzfrequenzen der durch die jeweiligen Induktivitäten L1 und Kapazitäten C1 (beide Fig. 3) gebildeten Schwingkreise sind als Identifikationskennzeichen zur Identifikation der Verbindungsbauteile 10 und damit der ihnen zugeordneten Anker 26 individuell gewählt.

Die Verbindungsbauteile 10 bilden eine Zusammenstellung **30** von Verbindungsbauteilen 10.

Das Überwachungssystem 24 weist ferner ein Kommunikationsgerät **32** auf. Dieses weist eine Anzeigeeinheit **34** auf. Das Kommunikationsgerät 32 ist eingerichtet, mit allen innerhalb eines bestimmten Sende- und Empfangsbereichs befindlichen Verbindungsbauteilen 10, hier beispielhaft mit allen in Fig. 5 dargestellten Verbindungsbauteilen, zu kommunizieren. Dazu strahlt es ein erstes Funksignal aus, das von den Verbindungsbauteilen 10 empfangen wird und durch das die elektronischen Elemente der Verbindungsbauteilen 10 mit Energie versorgt werden. Je nach jeweiliger elektrischer Ausgangsgröße, d. h. je nach elektrischem Widerstandswert R (Fig. 4) des Sensors 16 und damit je nach Anpresskraft, die auf das jeweilige Verbindungsbauteil 10 wirkt und je nach Sensorgrößen-Schwellwert S1, strahlen die Verbindungsbauteile 10 daraufhin Antwort-Funksignale aus. Ein oder mehrere der Verbindungsbauteile 10 können auch eingerichtet sein, dass im hochohmigen Zustand kein oder zumindest kein gültiges Antwort-Funksignal abgestrahlt wird. Die Antwort-Funksignale werden wiederum vom Kommunikationsgerät 32 empfangen und ausgewertet; insbesondere identifiziert das Kommunikationsgerät, beispielsweise durch Analyse der Frequenzspektren der Antwort-Funksignale, die jeweils sendenden Verbindungsbauteile 10. Das Kommunikationsgerät 32 kann auch eingerichtet sein, das Ausbleiben eines Antwort-Funksignals eines oder mehrerer der Verbindungsbauteile 10 zu detektieren.

Das Kommunikationsgerät 32 stellt anschließend die Ergebnisse der Auswertung auf der Anzeigeeinheit 34 dar. Im Beispiel gemäß Fig. 5 ist dazu dargestellt, dass drei der vier Verbindungsbauteile 10 ordnungsgemäß, eines jedoch nicht ordnungsgemäß sitzt.

**Fig. 6** zeigt einen Ablaufplan eines Herstellungsverfahrens **100** zur Herstellung eines den vorangehend beschriebenen Verbindungsbauteilen entsprechenden Verbindungsbauteils 10 (Fig. 1). Das Herstellungsverfahren 100 wird beispielhaft anhand des in Form einer Unterlegscheibe ausgebildeten, vorangehend beschriebenen Verbindungsbauteils 10 näher erläutert. Die bisher verwendeten Bezugszeichen werden zur Erleichterung des Verständnisses nachfolgend weiterverwendet.

In einem ersten Schritt **110** wird ein Sollwert der Sensormessgröße des Sensors 16 festgelegt. Als Sollwert wird in diesem Ausführungsbeispiel, bei dem die Sensormessgröße der Anpresskraft F entspricht, die für einen ordnungsgemäßen Sitz eines durch den Verbindungsbauteilkörper 12 geführten bzw. zu führenden Ankers erforderliche Mindest-Anpresskraft definiert.

In einem nächsten Schritt **112** wird der Sensormessgrößen-Schwellwert S1 der Schaltstufencharakteristik des Sensors 16 des Verbindungsbauteils 10 in Abhängigkeit von dem Sollwert der Sensormessgröße gewählt. Dazu wird als Sensormaterial ein mit Nanopartikeln dotiertes, elektrisch leitfähiges und elastisch verformbares Polymer mit einem druckabhängigen spezifischen Widerstandswert und einer sigmoidalen oder zumindest im Wesentlichen sigmoidalen Kraft F-Widerstandswert R-Kurve ausgewählt und passend zum Verbindungsbauteilkörper 12 geformt. Art und Dichte der Dotierung werden derart gewählt, dass der Sensormessgrößen-Schwellwert S1 dem in Schritt 110 festgelegten Sollwert entspricht.

In einem nächsten Schritt **114** wird das Verbindungsbauteil 10 zusammengebaut. Dazu werden vorgefertigte Einzelteile des Verbindungsbauteilkörpers 12, des Gehäuses 14, des Sensors 16 einschließlich dem beschriebenen Sensormaterial, des Wegbegrenzungselements 18, der Elektroden 20 und der Funkschnittstelle 22 zusammengefügt und soweit erforderlich elektrisch miteinander verbunden. Dabei wird bei der Bemessung des Wegbegrenzungselements 18 sichergestellt, dass eine Pressung des Sensors 16 mindestens bis zu der den Sensormessgrößen-Schwellwert S1 entsprechenden Kraft F möglich bleibt.

In einem abschließenden Schritt **116** erfolgt eine Endkontrolle des Verbindungsbauteils 10 durch Einprägen von Kräften F, nachfolgendem Auslesen der Daten über die Funkschnittstelle 22 und Vergleichen mit den Anforderungen gemäß dem festgelegten Sollwert. Insbesondere kann in diesem Schritt der sich ergebende Sensormessgrößen-Schwellwert S1 bestimmt und überprüft werden.

Denkbar ist, beispielsweise im Schritt 114, dem Verbindungsbauteil 10 zusätzlich ein spezifisches Identifikationskennzeichen einzuprägen. Dann kann, beispielsweise im Schritt 116, zusätzlich geprüft werden, ob das spezifische Identifikationskennzeichen abfragbar ist und/oder ob das abgefragte Identifikationskennzeichen zu dem ermittelten Sensormessgrößen-Schwellwert S1 passt.

## Patentansprüche

1. **Verbindungsbauteil** (10), umfassend
- einen Verbindungsbauteilkörper (12),
- einen Sensor (16), der eingerichtet ist, einen Wert einer auf den Sensor (16) einwirkenden Sensormessgröße in eine elektrische Ausgangsgröße umzusetzen und
- eine Funkschnittstelle (22), die eingerichtet ist, mit einem Kommunikationsgerät (32) in Abhängigkeit von der elektrischen Ausgangsgröße mittels wenigstens eines Funksignals zu kommunizieren,
**dadurch gekennzeichnet,**
**dass** der Sensor (16) eingerichtet ist, den Wert der Sensormessgröße in die elektrische Ausgangsgröße entsprechend einer stetigen Schaltstufencharakteristik mit wenigstens einem Sensormessgrößen-Schwellwert (S1) umzusetzen.

2. Verbindungsbauteil nach Anspruch 1, **dadurch gekennzeichnet, dass** die elektrische Ausgangsgröße ein elektrischer Widerstandswert (R), ein elektrischer Kapazitätswert und/oder ein elektrischer Induktivitätswert ist.

3. Verbindungsbauteil nach einem der vorhergehenden Ansprüche, **dadurch gekennzeichnet, dass** der Sensor (16) eingerichtet ist, als Sensormessgröße eine auf das Verbindungsbauteil (10) einwirkende und/oder eine im Verbindungsbauteil (10) wirkende Kraft (F) und/oder einen Druck in die elektrische Ausgangsgröße umzusetzen.

4. Verbindungsbauteil nach einem der vorhergehenden Ansprüche, **dadurch gekennzeichnet, dass** der Sensormessgrößen-Schwellwert (S1) der Schaltstufencharakteristik derart gewählt ist, dass eine ordnungsgemäße Verwendung des Verbindungsbauteils (10) und/oder eines zu überwachenden Bauteils (28) entweder stets mit einem Überschreiten oder stets mit einem Unterschreiten des Sensormessgrößen-Schwellwerts (S1) durch die Sensormessgröße einhergeht.

5. Verbindungsbauteil nach einem der vorhergehenden Ansprüche, **dadurch gekennzeichnet, dass** der Sensor (16) vollständig oder wenigstens teilweise im Verbindungsbauteil (12) eingebettet ist.

6. Verbindungsbauteil nach dem vorhergehenden Anspruch, **dadurch gekennzeichnet, dass** das Verbindungsbauteil (10), insbesondere sein Verbindungsbauteilkörper (12), ausgebildet ist, den Wert der auf den Sensor (16) einwirkenden Sensormessgröße auf einen Mindest- und/oder einen Höchstwert zu begrenzen.

7. Verbindungsbauteil nach einem der vorhergehenden Ansprüche, **dadurch gekennzeichnet, dass** der Sensor (16) ein Polymer, insbesondere ein leitfähiges und/oder elastisch verformbares Polymer, aufweist.

8. Verbindungsbauteil nach einem der vorhergehenden Ansprüche, **dadurch gekennzeichnet, dass** die Funkschnittstelle (22) als RFID-Tag ausgebildet ist und/oder ein RFID-Tag aufweist und/oder als passive Funkschnittstelle ausgebildet ist.

9. Verbindungsbauteil nach einem der vorhergehenden Ansprüche, **dadurch gekennzeichnet, dass** der Sensor (16) einen Teil der Funkschnittstelle (22) bildet und/oder umfasst.

10. Verbindungsbauteil nach einem der vorhergehenden Ansprüche, **dadurch gekennzeichnet, dass** der Verbindungsbauteilkörper (12) als wenigstens eine Schraube, als wenigstens ein Anker und/oder als wenigstens eine Unterlegscheibe ausgebildet ist und/oder wenigstens eine Schraube, wenigstens einen Anker und/oder wenigstens eine Unterlegscheibe aufweist.

11. Verbindungsbauteil nach einem der vorhergehenden Ansprüche, **dadurch gekennzeichnet, dass** das Verbindungsbauteil (10) wenigstens zwei Sensoren (16) aufweist, die jeweils eingerichtet sind, einen Wert einer auf den jeweiligen Sensor (16) einwirkenden Sensormessgröße in eine elektrische Ausgangsgröße umzusetzen.

12. **Zusammenstellung** (30) aus wenigstens einem ersten Verbindungsbauteil (10) nach einem der vorhergehenden Ansprüche mit einem ersten Sensor (16) und einem zweiten Verbindungsbauteil (10) nach einem der vorhergehenden Ansprüche mit einem zweiten Sensor (16),
**dadurch gekennzeichnet,**
**dass** der erste Sensormessgrößen-Schwellwert (S1) der Schaltstufencharakteristik des ersten Sensors sich von dem zweiten Sensormessgrößen-Schwellwert (S1) der Schaltstufencharakteristik des zweiten Sensors (16) unterscheidet.

13. **Überwachungssystem** (24), umfassend wenigstens ein Verbindungsbauteil (10) nach einem der Ansprüche 1 bis 11 und wenigstens ein Kommunikationsgerät (32), das eingerichtet ist, mit der Funkschnittstelle (22) des Verbindungsbauteils (10) zu kommunizieren.

14. Überwachungssystem nach dem vorhergehenden Anspruch, **dadurch gekennzeichnet, dass** das Kommunikationsgerät (32) oder zumindest ein Teil des Kommunikationsgeräts (32) an und/oder in einem mobilen Vehikel, insbesondere einem Fahrzeug und/oder einem Flugobjekt, angeordnet ist.

15. **Herstellungsverfahren** (100) zur Herstellung eines Verbindungsbauteils (10) nach einem der Ansprüche 1 bis 11,
**dadurch gekennzeichnet,**
**dass** der Sensormessgrößen-Schwellwert (S1) der Schaltstufencharakteristik des Sensors (16) des Verbindungsbauteils (10) in Abhängigkeit von einem Sollwert der Sensormessgröße gewählt wird.
